# EUROPEAN PATENT APPLICATION

(11) **EP 4 718 405 A1**
(43) Date of publication of application: **01.04.2026**
(21) Application number: 25203166.1
(22) Date of filing: 18.09.2025
(51) Int. Cl.: G07C 5/00, G07C 5/08

(54) **SYSTEMS AND METHODS FOR COLLISION DETECTION**

(30) Priority: 20.09.2024 US 202418891115
(71) Applicant: Motive Technologies, Inc., San Francisco, CA 94105 (US)
(72) Inventor: SANFORD, David, San Francisco, 94105 (US); DHARA, Raghu, San Francisco, 94105 (US); KHAN, Maheen, San Francisco, 94105 (US)
(74) Representative: Boult Wade Tennant LLP

(57) **Abstract**

A method for detecting vehicle collisions using multi-stage data analysis is described. Telematics data from a vehicle-installed computing device is received and processed through a heuristic filter to identify potential collisions. A feature vector is generated from the filtered data and input into a trained predictive model, which classifies the vector as representing a collision or not. The method then retrieves associated dashcam footage and uses it, along with the predictive model's output, to confirm the occurrence of a collision. Upon confirmation, a notification is transmitted to a remote computing device. This approach combines telematics data analysis, machine learning prediction, and video verification to achieve accurate collision detection and notification.

## Description

### BACKGROUND

The detection of vehicle collisions is an important aspect of automotive safety systems. Traditional methods for detecting collisions have primarily relied on mechanical sensors, such as accelerometers and gyroscopes, which measure sudden changes in velocity or orientation. These sensors can be integrated into the vehicle's airbag control system to trigger deployment in the event of a crash.

More recent advancements have introduced the use of electronic control units (ECUs) that process data from multiple sensors to improve the accuracy and reliability of collision detection. These systems often incorporate additional inputs from wheel speed sensors, brake pressure sensors, and even GPS data to provide a more comprehensive understanding of the vehicle's dynamics.

Despite these advancements, current collision detection systems still face challenges, such as distinguishing between actual collisions and non-collision events (e.g., potholes or abrupt braking). Additionally, the integration of these systems can be complex and costly.

### SUMMARY

Various aspects and embodiments of the invention are set out in the appended claims.

### BRIEF DESCRIPTION OF THE DRAWINGS

FIG. 1A is a block diagram illustrating a system for confirming collision events based on vehicle telematics data according to some of the disclosed embodiments.
FIG. 1B is a block diagram illustrating a system for confirming collision events based on candidate collisions detected by a vehicle computing system according to some of the disclosed embodiments.
FIG. 2 is a block diagram illustrating a logical system for confirming collision events according to some of the disclosed embodiments.
FIG. 3 is a flow diagram illustrating a method for detecting a potential collision event according to some of the disclosed embodiments.
FIG. 4 is a flow diagram illustrating a method for utilizing a heuristic framework for classifying candidate collision events according to some of the disclosed embodiments.
FIG. 5 is a flow diagram illustrating a method for classifying a collision event using a machine learning according to some of the disclosed embodiments.
FIG. 6 is a flow diagram illustrating a method for confirming that a predicted collision event is a true positive collision event using dashcam footage according to some of the disclosed embodiments.
FIG. 7 is a block diagram illustrating a computing device according to some embodiments of the disclosure.

### DETAILED DESCRIPTION

The disclosed embodiments solve the various aforementioned problems in the art of detecting automobile collisions. In brief, the disclosed embodiments utilize a multi-stage filtering approach to significantly reduce the amount of data analyzed to confirm or reject a potential collision data point. In most systems, the current approach to collision detection is to employ larger modeling techniques which inherently require more computationally expensive hardware and software. This approach suffers from multiple deficiencies. First, many in-vehicle computing devices cannot support large models dedicated solely for collision detection, especially given that collision events are relatively rare. Second, even when implemented server side, training such models is cumbersome given the paucity of training data. Further, given that collision detection usually includes a significant amount of false positive data points, excessive computing resources are used when employing a larger model for prediction, thus wasting resources. The disclosed technical solution solves these and other problems in the art of automated collision detection using onboard vehicle computing systems.

The disclosure describes a system and method for detecting vehicle collisions using a combination of telematics data, heuristic filtering, machine learning, and dashcam footage analysis. The system includes a vehicle computing device that generates telematics data and applies a heuristic filter to identify potential collisions. The filtered data, called collision candidates, is sent to a server.

The server processes these collision candidates by creating a feature vector and using a predictive model to determine if a collision has occurred. To confirm the collision, the server retrieves and analyzes dashcam footage associated with the vehicle. If a collision is confirmed, the server sends a notification to a remote device, which could be a first responder or a fleet manager.

The heuristic filter used in this system is complex, employing multiple sub-processes to independently predict collisions. These sub-processes analyze various aspects of the telematics data, including inertial measurement unit (IMU) acceleration and jerk, global positioning system (GPS) jerk, and speed jerk. The system uses a multi-signal coincidence process, flagging an event as a collision if a given number out of sub-processes indicate a positive result. The specific number of signals used is not intended to be limiting. For example, if speed data is available from the vehicle and GPS sensors and acceleration available from an IMU sensor, the system could use two-fold coincidence of above-threshold signals from any two sensors to identify a potential collision.

The method can be implemented on various computing devices, including those installed in vehicles and servers. It uses techniques such as gradient boosting trees for the predictive model and can employ both human review and machine learning models to analyze the dashcam footage for collision confirmation. The system is designed to be highly accurate in detecting collisions by combining multiple data sources and analysis techniques. It aims to provide quick and reliable collision notifications for emergency response and fleet management.

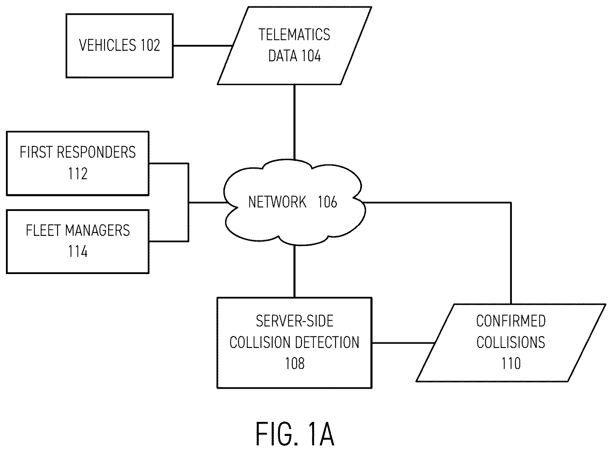

FIG. 1A is a block diagram illustrating a system for confirming collision events based on vehicle telematics data according to some of the disclosed embodiments.

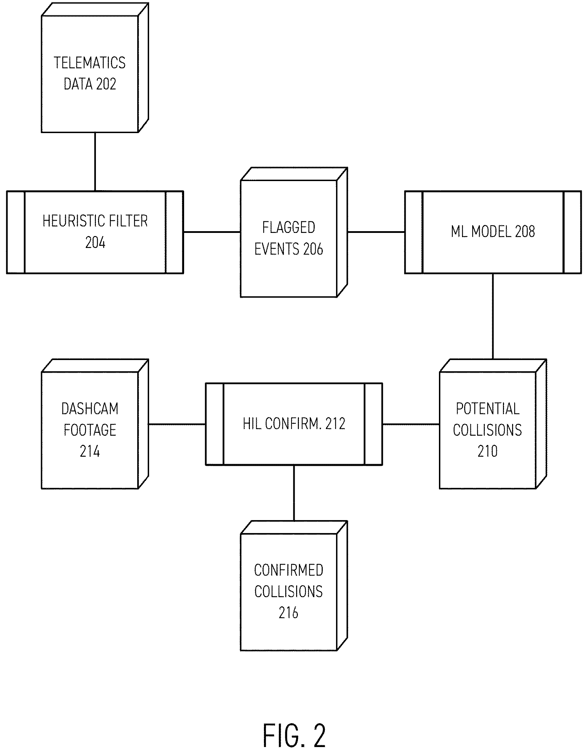

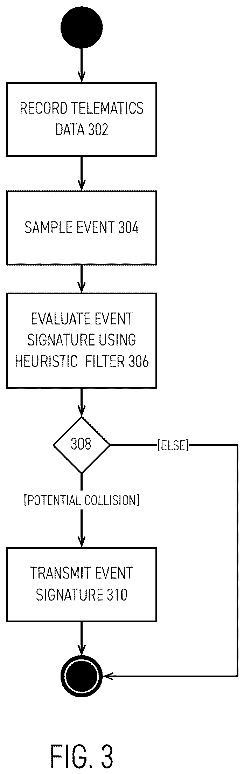

As illustrated, the system includes vehicles 102 which generate telematics data 104 during their operation. The vehicles 102 can transmit this telematics data 104 continuously, periodically, or otherwise via a network 106 (e.g., the Internet) to a server-side collision detection system 108. In some implementations, the server-side collision detection system 108 can comprise a cloud-based or otherwise remote processing environment for receiving and processing telematics data. One example of such an environment is depicted in FIG. 2. Ultimately, the server-side collision detection system 108 ingests data related to collisions included in the telematics data 104 and outputs confirmed collisions 110. In brief, confirmed collisions 110 represent true collisions of vehicles 102 detected and confirmed using the telematics data 104. In some implementations, server-side collision detection system 108 can transmit these confirmed collisions 110 to other computing devices or environments, such as first responders 112 or fleet managers 114. Architectural aspects of this system are described herein. Functional details of this system are briefly discussed herein, but are further described in the following flow diagrams in FIGS. 3 through 6, the disclosure of which is incorporated herein by reference in its entirety.

The system includes vehicles 102 equipped with various sensors that generate telematics data 104. In some implementations, these sensors can comprise factory-installed sensors generating data during the operation of the vehicle (e.g., speed sensors, airbag sensors, etc.). Further, in some implementations, the sensors can also include after market devices, such as dashcams, that also include sensors (e.g., inertial measurement units, global positioning system receivers, etc.) as described in more detail herein. As will be used herein, the data generated by such a network of sensors includes information from GPS units, IMUs, and the vehicle's onboard systems (after market, factory-installed, or otherwise). In some implementations, the GPS transceiver can provide location, speed, and heading information. In some implementations, the IMU can provide acceleration and angular velocity measurements in three dimensions. In some implementations, the vehicle's onboard system contributes data such as speed and potentially other operational metrics.

In some implementations, the telematics data may also include audio data captured by microphones installed in the vehicle or integrated into a dashcam device. This audio data can provide additional context for collision detection, as collision events often produce distinctive sounds. In some implementations, the system may analyze audio features such as sudden loud noises, the sound of metal deforming, or the activation of a vehicle's horn to corroborate other sensor data indicating a potential collision. The system may also incorporate data from the vehicle's tire pressure monitoring system (TPMS). Sudden changes in tire pressure, especially across multiple tires simultaneously, can be indicative of a collision event. This data stream provides another layer of information to enhance the accuracy of collision detection, particularly in scenarios where a collision might cause tire damage or blowouts. In addition to these checks, the system may also monitor for specific vehicular events that are highly indicative of a collision. These include airbag deployment and seatbelt pre-tensioning. If such events are detected, they may trigger an immediate classification of the event as a collision, bypassing other detection steps. This allows for rapid response in situations where these vehicle safety systems have already determined that a significant impact has occurred. For newer vehicle models equipped with built-in crash detection systems, the telematics data may also include direct crash detection signals from the vehicle's onboard systems. The collision detection system is designed to incorporate these signals when available, using them to corroborate or augment its own detection algorithms. In some implementations, these events can also be included in, for example, the method of FIG. 3, as a concurrent verification of a collision. For example, they may be included in a two-fold coincidence model along with IMU, GPS, and speed data. As discussed, the use of two-fold coincidence is not limited and any number of signals may be used in a multi-fold coincidence model.

As illustrated, vehicles 102 transmit their telematics data via a network 106 to a server-side collision detection system 108. The network can consist of cellular data networks and the Internet, enabling data transmission from vehicles in diverse locations. In areas with poor connectivity, the system may use data buffering and burst transmission to ensure data integrity.

The collision detection system 108 employs a multi-stage approach to process the incoming data. The first stage is a heuristic filter that quickly can identify potential collision events. This filter examines the telematics data for patterns indicative of collisions, such as sudden changes in velocity or unusual vehicle movements. It uses a multi-signal coincidence method, requiring a sufficient number of data sources (for instance, two of IMU, GPS, vehicle speed) to show anomalous readings before flagging an event. Details of this process are described in more detail in FIG. 3.

For each data source, the filter checks multiple criteria. It examines both the magnitude of acceleration and the rate of change of acceleration (referred to as jerk). For IMU data, it also considers the angle between the acceleration vector and gravity. These checks allow the system to detect various types of collision events, including those that might occur when a vehicle is stationary. Notably, many existing systems are unable to detect collision where a vehicle is stationary. The disclosed embodiments solve this problem while also addressing false positives.

Events that pass the heuristic filter move to the second stage: analysis by a machine learning model. This model is trained on a large dataset of known collision and non-collision events. It processes the flagged events in more detail, examining not just individual data points but also their patterns and relationships over time. The model can create a feature vector for each event, incorporating various calculated values derived from the raw sensor data. These might include data such as acceleration and jerk values from different sensors, changes in vehicle orientation, and other metrics that help distinguish collision events from other anomalous vehicle movements. Based on this analysis, the model assigns a probability score to each event, indicating how likely it is to be a genuine collision. This analysis can be performed either on the device or on the server.

Events exceeding a certain probability threshold proceed to the final stage: human review. Here, trained operators examine the high-probability events, with the aid of additional context such as dashcam footage when available. This human-in-the-loop approach helps ensure high accuracy in the final collision confirmations. In some implementations, the human-in-the-loop process may be augmented or replaced by a computer vision model that can process the dashcam footage to confirm collisions.

The output of this process is a set of confirmed collisions 110. The system can then notifies relevant parties about these confirmed collisions, such as first responders 112 and fleet managers 114. These notifications can include detailed information about the collision's location, estimated severity, and other relevant data to aid in rapid response and efficient incident management. Thus, in some implementations, server-side collision detection system 108 can retrieve this additional detail from a database of vehicle data and generate such a message.

This multi-stage approach allows the system to process large volumes of data while maintaining high sensitivity to potential collision events. It can detect a wide range of collision types, from severe impacts to more subtle events that simpler systems might miss. Additionally, the system can detect collisions where the vehicle recording the data is stationary.

In some implementations, the system can be improved over time. Specifically, as it processes more data and identifies more collisions, both the heuristic filter and the machine learning model can be refined. This allows the system to adapt to changes in vehicle technology, driving patterns, or the nature of collisions. In addition to detecting collisions, the system generates a wealth of data that can be used for further analysis. This includes various computed values derived from the raw sensor inputs, allowing for detailed post-event analysis and continuous improvement of the detection algorithms.

In summary, FIG. 1A depicts a system for detecting and confirming vehicle collisions using telematics data. It combines data from multiple vehicle sensors, efficient transmission methods, multi-stage processing including both heuristic and machine learning approaches, and human or computer vision verification. This system provides accurate and timely collision detection, facilitating faster emergency response, more efficient fleet management, and potentially providing insights to help prevent future collisions.

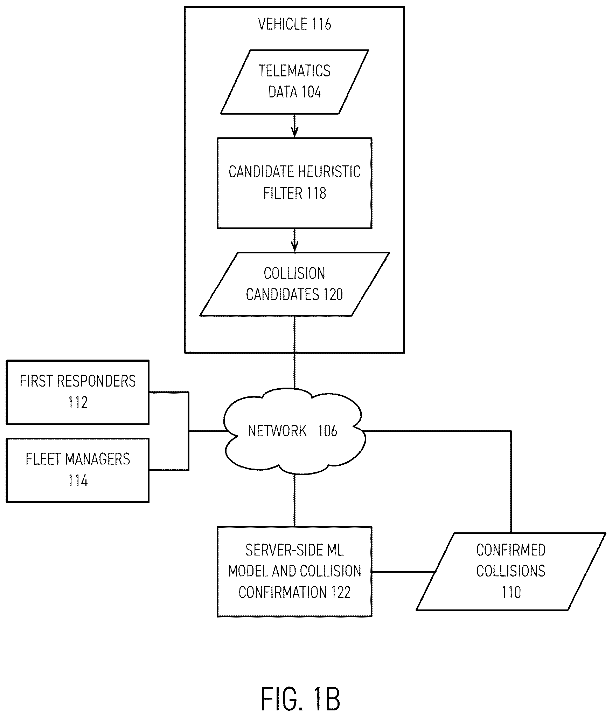

FIG. 1B is a block diagram illustrating a system for confirming collision events based on candidate collisions detected by a vehicle computing system according to some of the disclosed embodiments.

As illustrated, the system includes a vehicle 116 which generates telematics data 104. As discussed in FIG. 1A, the system may indeed include multiple such vehicles, which are not illustrated for the sake of clarity. Telematics data 104 has been described previously in FIG. 1A and is not repeated herein, but the description is incorporated by reference in its entirety. As illustrated, each vehicle 116 includes a candidate heuristic filter 118. In some implementations, this candidate heuristic filter 118 can comprise a heuristic filter for classifying telematics data 104 as potentially representing a collision. The candidate heuristic filter 118 can output collision candidates 120. In some implementations, these collision candidates can comprise vectorized representations of telematics data 104 that represent potential collision events. Vehicle 116 can transmit collision candidates 120 to a server-side ML model and collision confirmation system 122 via a network 106 (e.g., the Internet). In some implementations, server-side ML model and collision confirmation system 122 can include a subset of the components of server-side collision detection system 108 discussed previously. As with server-side collision detection system 108, the server-side ML model and collision confirmation system 122 ingests collision candidates 120 and outputs confirmed collisions 110. In some implementations, server-side ML model and collision confirmation system 122 can transmit these confirmed collisions 110 to other computing devices or environments, such as first responders 112 or fleet managers 114. Architectural aspects of this system are described herein. Functional details of this system are briefly discussed herein but are further described in the following flow diagrams in FIGS. 3 through 6, the disclosure of which is incorporated herein by reference in its entirety.

The system includes vehicle 116 equipped with various sensors that generate telematics data 104. This data is similar to that described in FIG. 1A, including information from GPS units, IMUs, and the vehicle's onboard systems. However, instead of transmitting all of this raw data directly to a central server, the vehicle 116 in FIG. 1B includes a candidate heuristic filter 118 installed within the vehicle.

In some implementations, the candidate heuristic filter 118 is a computer system installed within the vehicle that performs the initial analysis of the telematics data. This model applies a set of algorithms and heuristics to identify potential collision events in real-time as the vehicle operates. The model examines the telematics data for patterns that might indicate a collision, such as sudden changes in velocity, unusual accelerations, or rapid changes in vehicle orientation. In some implementations, this candidate heuristic filter 118 can perform the functions of the heuristic filter described above and herein.

When the candidate heuristic filter 118 identifies a potential collision event, it generates collision candidates 120. These candidates represent a subset of the telematics data that has been flagged as potentially representing a collision event. The collision candidates can include not just the raw sensor data from the time of the suspected event, but also derived values and features that the onboard system has calculated. These collision candidates 120 are then transmitted via the network 106 to a server-side ML model and collision confirmation system 122. By transmitting only the collision candidates rather than all telematics data, this approach significantly reduces the amount of data that needs to be sent over the network. This can be particularly beneficial in areas with limited network bandwidth or in situations where data transmission costs are a concern.

The server-side ML model and collision confirmation system 122 receives these collision candidates and performs further analysis to determine whether they represent actual collision events. As a server-side system, server-side ML model and collision confirmation system 122 can employ more computationally intensive algorithms than those that can be run on the vehicle's onboard systems. As discussed with respect to FIG. 1A, server-side ML model and collision confirmation system 122 may use advanced machine learning models that have been trained on large datasets of known collision and non-collision events. Similar to the machine learning aspects of FIG. 1A, the server-side ML model and collision confirmation system 122 processes the collision candidates to produce a set of confirmed collisions 110. These are events that the system has determined, with a high degree of confidence, to be actual vehicle collisions. In some implementations, server-side ML model and collision confirmation system 122 can further include a human-in-the-loop or computer vision verification stage as described in FIG. 1A and not repeated herein.

As in FIG. 1A, information about these confirmed collisions is then transmitted to relevant parties such as first responders 112 and fleet managers 114. The system can provide these parties with detailed information about the collision, potentially including its location, estimated severity, and other relevant data derived from the telematics information.

This distributed approach to collision detection offers several advantages. By performing initial processing on the vehicle, it can reduce network load and potentially allow for faster initial detection of collision events. It also provides a degree of functionality even in areas with poor or intermittent network connectivity, as the vehicle can still perform initial collision detection even if it temporarily loses connection to the central system.

In summary, FIG. 1B presents a distributed approach to collision detection where initial processing occurs on the vehicle, generating collision candidates that are then confirmed by a central server. This approach can offer benefits in terms of reduced data transmission and potential improvements in detection speed.

FIG. 2 is a block diagram illustrating a logical system for confirming collision events according to some of the disclosed embodiments.

As illustrated, the system receives telematics data 202. In some implementations, telematics data 202 comprises telematics data generated by vehicles as discussed with respect to telematics data 104. Upon receive, the system applies a heuristic filter 204 to the telematics data to generate flagged events 206. In some implementations, the heuristic filter 204 comprises a lightweight model that can quickly classify telematics data as representing collisions, albeit with a higher error rate than a more complex model. In some implementations, heuristic filter 204 can be implemented on a server computing device (as discussed in FIG. 1A) or onboard a vehicle (as discussed in FIG. 1B). The system further includes a machine learning model 208. The machine learning model 208 receives flagged events 206 and further classifies the flagged events 206 as either representing or not representing collisions. Those flagged events 206 that are predicted to be true collisions are output and stored as potential collisions 210. In some implementations, machine learning model 208 can comprise a predictive model, such as a gradient boosting tree. In some implementations, the machine learning model 208 can also employ a vectorization stage that converts a batch of raw telematics data into a feature vector suitable for classification. The system further includes a human-in-the-loop confirmation 212 stage. In some implementations, the human-in-the-loop confirmation 212 enables editors to review the potential collisions 210 for a confirmation or rejection of the machine learning-predicted collisions. To enable this confirmation, the human-in-the-loop confirmation 212 can retrieve dashcam footage 214 that is contemporaneous with the potential collisions 210 and can be used by human editors to confirm or reject potential collisions 210. Confirmed collisions 216 can be stored and transmitted to other systems, such as first responders or fleet managers. In an optional implementation, human-in-the-loop confirmation 212 can be replaced or augmented with a second machine learning model, such as a convolutional network or transformer-based model, which can automatically confirm potential collisions 210 using images and/or video in dashcam footage 214.

As illustrated, the system receives telematics data 202. This data is a comprehensive set of measurements and readings from various sensors and systems onboard the vehicle. It includes, but is not limited to, (1) GPS data providing information about the vehicle's location, speed, and heading; (2) vehicle speed data (e.g., in raw or smoothed form); (3) IMU data including accelerometer and gyroscope (e.g., angular velocity) readings in multi-dimensional space; and a (4) gravity vector providing information about the vehicle's orientation relative to the Earth's gravitational field. The telematics data can be collected at a high frequency, often multiple times per second, to ensure that even brief events like collisions are captured in detail. As discussed, in some implementations, the system can receive this telematics data 202 over a network from a vehicle. In other implementations, an onboard device may receive this telematics data 202 over an internal bus.

The first stage of processing this telematics data in the system is performed by a heuristic filter 204. This filter is designed to quickly identify potential collision events from the stream of incoming data. It can apply a set of predefined rules and thresholds to flag anomalous events that could represent collisions.

In some implementations, the heuristic filter 204 can employ an algorithm that considers data from multiple sensors simultaneously and performed a multi-fold coincidence process. In some implementations, it can use a two-fold coincidence process, requiring at least two out of three (or more) sensor types (IMU, GPS, vehicle speed, etc.) to indicate a potential collision. This approach helps to reduce false positives that might result from a single erroneous sensor reading.

In some implementations, for the IMU data, the heuristic filter 204 checks two conditions: (1) 1. if the jerk (rate of change of acceleration) exceeds a predefined IMU jerk threshold (e.g., 2.3 m/s³); and (2) if the cosine of the angle between the instantaneous acceleration vector and gravity is less than an IMU angle threshold (e.g., 0.965). In some implementations, for GPS speed, the heuristic filter 204 can check (1) if the acceleration exceeds a GPS acceleration threshold (e.g., 1.6 m/s²); and (2) if the GPS jerk exceeds a GPS jerk threshold (e.g., 1.0 m/s³). In some implementations, for vehicle speed, the heuristic filter 204 can check (1) if the acceleration exceeds a speed acceleration threshold (e.g., 1.5 m/s²) and (2) if the jerk exceeds a speed jerk threshold (e.g., 1.0 m/s³). In addition to these checks, the heuristic filter 204 may employ an override condition where an IMU jerk exceeding an override threshold (e.g., 3.0 m/s³) automatically flags an event as a potential collision. This may be useful for detecting collisions that occur when the vehicle is stationary, which might not trigger the speed-based checks. Certainly, the specific values of thresholds are adjustable and the foregoing examples are not limiting.

In some implementations, the system can employ specialized algorithms for detecting specific classes of events, some of which present unique challenges in collision detection. These could include events such as rollovers, jackknifes, T-bones, and off-round events. For example, in some implementations, along with the aforementioned checks, these algorithms analyze the vehicle's orientation and rotational velocity to identify the distinctive motion patterns associated with a vehicle rollover. This rollover detection method ensures that these potentially severe collision events are accurately identified and promptly reported.

The output of the heuristic filter is a set of flagged events 206. These are subsets of the telematics data that have been identified as potentially representing collision events. Each flagged event can include not just the raw sensor data from the time of the suspected event, but also a range of calculated values derived from this data.

These flagged events then proceed to the next stage of processing: analysis by a machine learning model 208. In some implementations, the machine learning model can take as input a feature vector generated from each flagged event. This feature vector includes a wide range of values calculated from the raw sensor data corresponding to a flagged event, including, without limitation, (1) GPS-derived values such as acceleration, jerk, angular velocity, angular acceleration, and lateral acceleration; (2) vehicle speed-derived values such as acceleration and jerk; (3) IMU-derived values such as acceleration norm, jerk norm, angular velocity norm, relative acceleration norm (acceleration with gravity subtracted), and other angular measurements; and (4) compound values, such as, the cosine of the angle between acceleration vectors at subsequent timestamps, which can indicate sudden changes in the direction of motion. Certainly, other telematics metrics may be used.

The chosen machine learning model (e.g., a gradient boosting tree) analyzes these feature vectors, considering not just the magnitude of individual measurements but also their patterns over time and their relationships to each other. This allows the machine learning model to distinguish between true collision events and other anomalous events that may have similar characteristics but are not actually collisions.

In some implementations, the feature vector generation process can handle the complexity of multiple data streams arriving at different frequencies. For example, GPS data may update less frequently than IMU data, while vehicle speed data might have its own distinct update rate. The system can use time-series analysis and data fusion techniques to synchronize and integrate these varied data streams, ensuring that the resulting feature vector provides an accurate representation of the vehicle's state at the time of the potential collision event

The output of the machine learning model is a set of potential collisions 210. These are events that the machine learning model has classified as having a high probability of being true collision events. Each potential collision is associated with a probability score indicating the model's confidence in its classification. In some implementations, the output of the machine learning model may alternative comprise a set of confirmed collisions. For example, as described below, during initial inference a human-in-the-loop process can be used to manually annotate the set of potential collisions 210 which can then be used to continuously re-train the machine learning model.

The final stage of the collision detection process involves human-in-the-loop confirmation 212. In this stage, trained human operators review the potential collisions identified by the machine learning model. This human review serves as a check to ensure the accuracy of the collision detection process. To aid in this review process, the system retrieves dashcam footage 214 associated with each potential collision event. This footage provides visual context for the event, allowing the human reviewers to see what was happening in and around the vehicle at the time of the suspected collision. The human reviewers examine both the telematics data and the dashcam footage for each potential collision. They look for visual evidence of a collision in the dashcam footage, such as sudden camera movements, visible impacts, or abrupt changes in the vehicle's surroundings. They also correlate this visual information with the telematics data, looking for correspondence between what they see in the video and what the sensor data indicates.

This human review process can perform several important functions. First, it can provide a final verification of collision events, helping to eliminate any remaining false positives that may have made it through the automated stages. Second, it allows for the identification of collision types or scenarios that the automated systems might not be well-tuned to detect, providing valuable input for future improvements to the algorithms. Third, it can provide additional context about the collision that might not be apparent from the sensor data alone, such as road conditions, the involvement of other vehicles, or potential causes of the collision.

The output of this human review process is a set of confirmed collisions 216. These are events that have passed through all stages of the detection process and have been verified by human reviewers as being true collision events.

As discussed, the human-in-the-loop confirmation 212 portion of the system may be optional and the system may alternatively (or concurrently) employ computer vision techniques to replace (or supplement) human review. For example, the system may use convolutional network or similar machine learning approaches to automatically classify dashcam footage as including a collision. In some implementations, the model can also use telematics data as a portion of a feature vector (along with dashcam footage) to predict a collision. In some implementations, this model can be trained by the result of the human-in-the-loop process. Thus, the human-in-the-loop process can be used to bootstrap the system and train the computer vision model before turning over final verification to a computer vision model.

In summary, FIG. 2 depicts a multi-stage system for detecting and confirming vehicle collision events. By combining rule-based heuristics, machine learning, and human expertise or computer vision, the system aims to provide highly accurate collision detection while processing large volumes of telematics data. This approach allows for the detection of a wide range of collision types and severities, providing valuable information for emergency response, fleet management, and ongoing safety improvements.

FIG. 3 is a flow diagram illustrating a method for detecting a potential collision event according to some of the disclosed embodiments.

In step 302, the method can include recording telematics data.

This telematics data is collected from a variety of sensors installed in the vehicle, including GPS units, IMUs, and the vehicle's onboard diagnostic systems. The GPS provides location, speed, and heading information, while the IMU captures acceleration and angular velocity in three dimensions. The vehicle's onboard systems contribute data such as engine performance metrics and wheel speed. All these data points can be recorded at high frequencies, often multiple times per second, to ensure that even brief, sudden events are captured accurately.

In step 304, the method can include sampling an event from the telematics data.

The sampling process involves extracting a segment of the recorded telematics data over a predetermined time window. This window can be chosen to be long enough to capture the full progression of a potential collision event, including the moments immediately before and after a suspected impact. The sampled event can include data from all available sensors, creating a snapshot of the vehicle's state and behavior during the period of interest. This snapshot may also include derived values calculated from the raw sensor data, such as jerk (rate of change of acceleration) or rate of change of angular velocity, which can provide additional insights into the nature of the event. The specific sampling window chosen is not limited and may be adjusted as needed.

In step 306, the method can include evaluating an event signature using a heuristic filter.

This heuristic filter applies a set of predefined rules and thresholds to the sampled event data to identify patterns that might indicate a collision. The filter examines various aspects of the data, including sudden changes in velocity, unusual acceleration or deceleration patterns, rapid changes in vehicle orientation, and anomalous readings from multiple sensors. It employs an algorithm (described in FIG. 3) that considers data from multiple sensors simultaneously, using a multi-signal coincidence process. This process generally requires at least two out of three (or more) sensor types (IMU, GPS, vehicle speed) to show anomalous readings before flagging an event as a potential collision. The specific number of confirmations is not limited, and more or fewer may be implemented in practice.a

The heuristic filter is computationally efficient, allowing for rapid initial screening of events. It's calibrated to have high sensitivity, potentially flagging more events than are actual collisions, to ensure that true collision events are not missed in this initial filtering stage. The thresholds and rules used in the filter are based on extensive analysis of real-world collision data and can be periodically updated to improve detection accuracy based on, for example, a false positive rate.

For the IMU data, the filter can check if the jerk (rate of change of acceleration) exceeds a certain threshold or if the cosine of the angle between the instantaneous acceleration vector and gravity falls below a specific value. These checks can indicate sudden, severe changes in the vehicle's motion or orientation that are often associated with collisions. When evaluating GPS speed data, the filter can check for acceleration exceeding a threshold or a jerk value surpassing a fixed threshold. Similar thresholds might be applied to the vehicle's reported speed from its onboard systems. These checks help identify rapid speed changes that could indicate a collision. The filter can also include logic to handle special cases, such as collisions that occur when the vehicle is stationary. For instance, it might include an override condition where an IMU jerk exceeding a higher threshold (e.g., 3.0 m/s³) automatically flags an event as a potential collision, regardless of the readings from other sensors.

By combining these various checks and thresholds, the heuristic filter can quickly identify events that warrant further investigation. It serves as a first line of detection, processing large volumes of telematics data to isolate potential collision events for more detailed analysis in subsequent stages of the detection system.

In some implementations, the edge device may further include a lightweight model specifically designed to detect extreme collision events. This model is optimized for speed and can quickly identify high-severity events such as rollovers or T-bone collisions. When such events are detected, the system can initiate immediate actions, such as alerting emergency services, without waiting for further processing or confirmation from the more comprehensive server-side analysis.

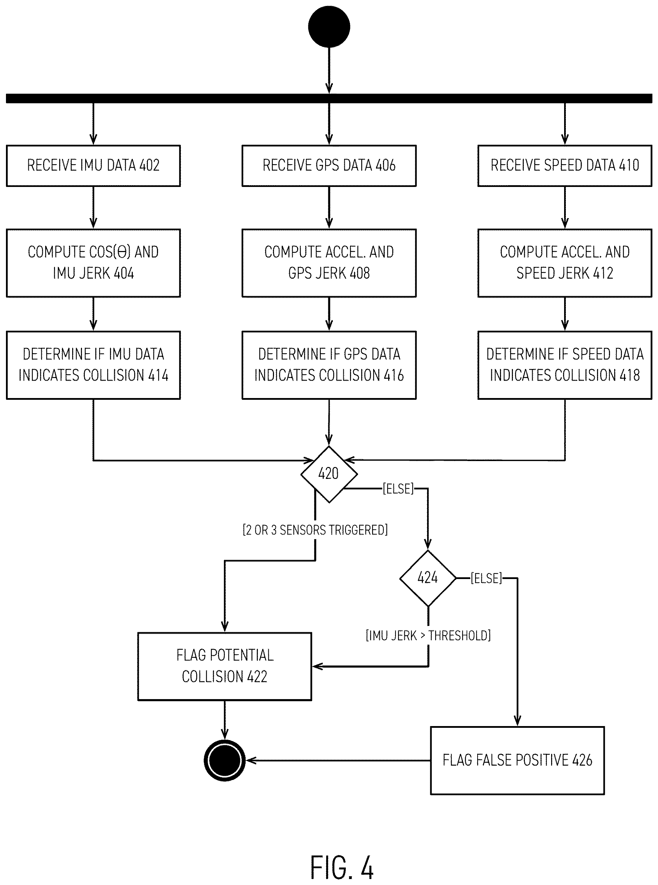

In step 308, the method parses the event signature to determine if the signature represents a potential collision. If the method determines that the event signature is not representative of a potential collision, the method ends. If, on the other hand, the method determines that the event signature is indicative of a potential collision, the method proceeds to step 310. Further details of step 306 and step 308 are provided next in the description of FIG. 4.

In step 310, the method can include transmitting the event signature to a remote system for further processing.

This transmission involves sending collision candidates to a centralized analysis system either via a network (when the heuristic filter is deployed in a vehicle) or via an internal interface (otherwise). These candidates can include the raw sensor data from the time window surrounding the suspected collision, as well as any derived values or features calculated by the onboard system. It may also contain contextual information such as the vehicle's location, the time of the event, and relevant vehicle status information.

FIG. 4 is a flow diagram illustrating a method for utilizing a heuristic framework for classifying candidate collision events according to some of the disclosed embodiments.

As illustrated, the method of FIG. 4 begins with three concurrent processes. While concurrency is illustrated, in other implementations, a sequential implementation may be used. In general, since step 402 through 418 represent independent subprocesses, no limit is placed on the ordering or parallelism employed. Further, while a two-fold coincidence is described herein, the disclosure is not limited as such and the illustrated method can be extended to any number of coincidences.

In a first sub-process, the method can include receiving IMU data (step 402), computing the cosine of the angle (θ) between the IMU acceleration vector and gravity and the IMU jerk (step 404), and determining if the IMU data indicates collision (step 414).

This sub-process focuses on analyzing data from the IMU to detect potential collision events. The IMU data, can include three-dimensional acceleration and angular velocity measurements, is first received and preprocessed. The system then computes two metrics: the cosine of the angle (θ) between the IMU acceleration vector and gravity, and the IMU jerk (the rate of change of acceleration). In some implementations, the cosine of the angle between acceleration and gravity provides information about the vehicle's orientation and any sudden changes in its position relative to the ground. A value significantly different from one (which represents normal gravitational acceleration) can indicate a collision or rollover event. The IMU jerk calculation helps identify sudden, sharp changes in acceleration that are characteristic of collisions. By examining both the magnitude and direction of the jerk vector, the system can differentiate between normal driving maneuvers and potential impact events. In step 414, these computed values are compared against predetermined thresholds. The system may flag a potential collision if the cosine value falls below a certain level (e.g., 0.965) or if the jerk exceeds a specific magnitude (e.g., 2.3 m/s³).

In a second sub-process, the method can include receiving GPS data (step 406), computing an acceleration value and GPS jerk value (step 408), and determining if the GPS data indicates a collision (step 416).

This sub-process includes analyzing GPS data to identify potential collision events. The system first receives GPS data, which can include the vehicle's position, speed, and heading information. From this raw data, the system computes two derivatives values: acceleration and jerk (rate of change of acceleration) based on the GPS speed measurements. The acceleration can be calculated by examining the change in GPS-reported speed over time. This provides metrics representing into how rapidly the vehicle's velocity is changing, which can be indicative of a collision event. Sudden, severe decelerations are particularly of interest, as they often occur during impacts. The GPS jerk value can then be computed by calculating the rate of change of the derived acceleration. This metric can highlight abrupt changes in the vehicle's motion that may not be as apparent from the acceleration data alone. Rapid fluctuations in jerk can be characteristic of the complex dynamics involved in a collision. In step 416, the system evaluates whether these computed values suggest a collision. This can involves comparing the acceleration and jerk values against predefined thresholds. For instance, the system might flag a potential collision if the GPS-derived acceleration exceeds 1.6 m/s² or if the jerk surpasses 1.0 m/s³. These thresholds are calibrated based on analysis of data from known collision events, balancing the need to detect genuine collisions with the goal of minimizing false alarms.

In a third sub-process, the method can include receiving speed data of a vehicle (step 410), computing an acceleration value and a speed jerk value (step 412), and determining if the speed data indicates a collision (step 418).

This sub-process can include analyzing the vehicle's speed data, which can be obtained from the vehicle's onboard systems, to detect potential collision events. The system first receives the speed data, which is usually reported at regular intervals from the vehicle's internal sensors. Using this speed data, the system can compute two metrics: acceleration and jerk. The acceleration is calculated by examining the change in vehicle speed over time, representing how quickly the vehicle is speeding up or slowing down. This can be used for identifying sudden stops or rapid speed changes that might indicate a collision. The speed jerk value can then be computed by calculating the rate of change of the acceleration. This metric can reveal abrupt changes in the vehicle's motion that might not be as evident from the acceleration data alone. Sudden spikes in jerk can be indicative of the complex dynamics involved in a collision event. In step 418, the system evaluates whether these computed values suggest a collision. This can involve comparing the acceleration and jerk values against predefined thresholds. For example, the system might flag a potential collision if the vehicle-reported acceleration exceeds 1.5 m/s² or if the jerk surpasses 1.0 m/s³. These thresholds can be calibrated based on analysis of data from known collision events, striking a balance between detecting genuine collisions and minimizing false positives.

In some implementations, the outputs of step 414, step 416, and step 418 each can comprise a Boolean value or similar type of binary value. In step 420, the method can then include determining if two or more of these values are positive (i.e., at least two sub-processes determined that a collision occurred). If so, the method proceeds to step 422. If not, the method proceeds to step 424.

This step can implement a coincidence detection approach to improve the reliability of collision detection. By requiring at least two out of the three (or more) sub-processes (such as IMU, GPS, and vehicle speed) to indicate a potential collision, the system reduces the likelihood of false positives that might arise from anomalies or errors in a single data source. The Boolean outputs from each sub-process can represent a binary decision: either the data from that source suggests a collision (true) or it does not (false). The coincidence check in step 420 adds a layer of confirmation, ensuring that multiple independent data sources corroborate the potential collision event. This approach helps to filter out false alarms that might be triggered by sensor errors, temporary data anomalies, or non-collision events that might produce unusual readings in a single sensor system. For example, driving over a pothole might cause a spike in IMU readings but is unlikely to significantly affect GPS or vehicle speed data.

If at least two of the three (or more) sub-processes indicate a potential collision, the method proceeds to step 422, treating the event as a likely collision candidate for further analysis. If fewer than two sub-processes indicate a collision, the method moves to step 424, where additional checks may be performed before deciding whether to discard the event or flag it for further investigation.

In step 422, the method can include flagging the telematics data used in the three sub-processes as representative of a collision.

When the method reaches step 422, it has determined that there is a high likelihood of a collision event based on the coincidence of at least two out of three (or more) data sources (such as IMU, GPS, and vehicle speed) indicating anomalous behavior. At this point, the system flags the relevant telematics data for further processing and analysis.

This flagging process involves marking the specific time window of data surrounding the potential collision event. The flagged data typically includes not just the exact moment when thresholds were exceeded, but also a period before and after this moment to provide context for the event. This collision candidate includes the raw sensor readings from all available sources, as well as the computed values (such as acceleration, jerk, and angular measurements) that led to the collision determination. The flagged data can be assigned a unique identifier and may be tagged with additional metadata such as the vehicle ID, timestamp, location, and which specific sub-processes indicated a collision. This flagging serves to prioritize the event for more detailed analysis in subsequent stages of the collision detection system, potentially including review by more sophisticated computer vision algorithms or human analysts.

By flagging the data at this stage, the system ensures that potential collision events are not overlooked and are properly queued for further investigation, while also maintaining a record of the decision-making process that led to the collision determination.

In step 424, alternatively, the method can perform a second check that includes determining if the measured IMU jerk is above a fixed threshold. If so, the method proceeds to step 422, described above.

In this step, the method provides an additional safeguard in the collision detection process, specifically designed to catch high-intensity events that might be missed by the coincidence check. This step focuses on the IMU jerk measurement, which represents the rate of change of acceleration and can be particularly sensitive to sudden, violent motions characteristic of severe collisions. Other types of "circuit breaker" conditions may also be employed.

In this step, the method compares the measured IMU jerk against a fixed threshold. This threshold is typically set higher than the one used in the initial IMU sub-process (step 414), for example, at or around 3.0 m/s³. The higher threshold helps ensure that only truly significant events trigger this condition.

This additional check can be used for detecting certain types of collision events that might not trigger signals from a sufficient number of sub-processes. For example, it can help identify collisions that occur when the vehicle is stationary (where GPS and vehicle speed data might not show significant changes), very brief, high-intensity impacts that might be smoothed out in the GPS or vehicle speed data due to their lower sampling rates, rollover events where the primary motion might be rotational rather than translational, and other similar events.

If the IMU jerk exceeds this fixed threshold, the method proceeds to step 422, flagging the event as a potential collision whether or not the typical multi-signal coincidence criterion is met. This approach ensures that severe events are not missed due to the limitations of the coincidence method, providing an additional layer of sensitivity in the collision detection process.

In step 426, if only one sensor indicates a collision and the measured IMU jerk is below the fixed threshold, the method can flag the telematics data of the event as a false positive.

When an event reaches this stage, it means that insufficient signals have indicated a potential collision, and the event lacks the corroboration from extreme IMU jerk that would suggest a severe impact. This situation often arises from non-collision events that produce anomalous readings in individual sensor systems. By flagging these events as false positives, the system can prevent these events from being processed as potential collisions in subsequent stages, reducing the computational load on more advanced analysis systems. Further, the system can use false positives to create a record of the event and the decision-making process, which can be used for system refinement and quality assurance. Further, the system can accumulate a dataset of false positive events, which can be used to improve the collision detection algorithms over time. Finally, the system can use false positives as a mechanism for identifying potential sensor issues or calibration needs if a particular data source consistently produces false positives.

While these events are labeled as false positives, the system may still retain the associated telematics data for a period of time. This retention allows for potential reanalysis if needed and contributes to the ongoing process of refining and improving the collision detection system's accuracy and reliability.

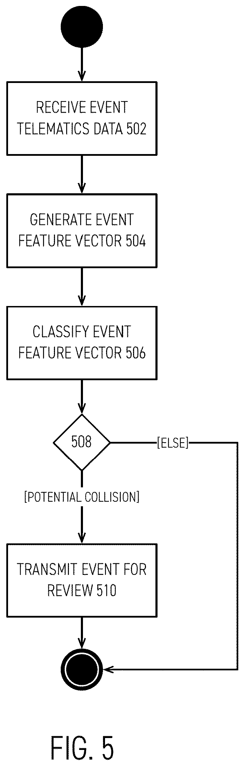

FIG. 5 is a flow diagram illustrating a method for classifying a collision event using a machine learning system according to some of the disclosed embodiments.

In step 502, the method can include receiving event telematics data. In some implementations, this event telematics data refers to a series of telematics data samples associated a potential collision event (as described in previous figures). In general, the received telematics data may be of the same form, but may be specific to potential collisions and not all events.

In step 504, the method can include generating an event feature vector based on the received telematics data.

The generation of event feature vectors transforms the raw telematics data into a format suitable for machine learning analysis. This process involves extracting and calculating a wide range of features from the time-series data that can effectively characterize a collision event. The feature vector typically includes statistical measures such as maximum, minimum, mean, and standard deviation of various sensor readings over an event window. It may also incorporate derived features like the cosine of the angle between the acceleration vector and gravity, the correlation between different sensor readings, or frequency-domain representations of the data. Some specific features might include the peak acceleration in each axis, the maximum jerk value, the duration of the peak acceleration, the change in vehicle orientation, and the overall energy of the event. The feature vector may also include contextual information such as the vehicle's speed at the start of the event, the time of day, and the type of road.

In step 506, the method can include classifying the event feature vector using a predictive model.

In some implementations, this parsing process can include a more detailed analysis of the event signature flagged by the heuristic filter. In some implementations, while the heuristic filter may be deployed in either the vehicle or the server, the analyzing of the feature signature may be performed on the server.

In step 506, the method employs a machine learning model, such as a gradient boosting tree, to parse the event signature and determine if it represents a potential collision. This step can be used to distinguish genuine collision events from other anomalous vehicle behaviors that may have similar telematics signatures. The model used in this step can be trained on a large dataset of known collision and non-collision events. It takes as input the feature vector derived from the telematics data, which includes various calculated values such as acceleration magnitudes, jerk values, angular velocities, and other complex metrics derived from the raw sensor data. In a GBT implementation, the model processes this feature vector through a series of decision trees. Each tree in the ensemble contributes to the final classification by learning to identify specific patterns or combinations of features that are indicative of collision events. The boosting aspect of the algorithm allows it to focus on and improve its performance on the most challenging cases with each subsequent tree.

As illustrated, in one implementation, a GBT may be used as the model. In some implementations, a GBT model provides numerous advantages. Specifically, it can handle non-linear relationships between features and provide insights into which features are most important for collision detection, potentially informing future sensor deployments or data collection strategies. A GBT is further less sensitive to outliers than many other machine learning models, which is important given the potential for sensor errors or unusual but non-collision events. Finally, GBTs offer a degree of interpretability that can be used for validating and explaining the model's decisions.

While gradient boosting trees (GBTs) are effective for collision detection the disclosure is not limited only to GBT models. Alternative models that could be employed include random forests, which offer similar advantages to GBTs in terms of handling non-linear relationships and providing feature importance but may be less prone to overfitting on noisy data. Support Vector Machines (SVMs) could be used for their ability to find optimal decision boundaries in high-dimensional spaces, potentially capturing subtle patterns in the telematics data. Deep neural networks, particularly recurrent neural networks (RNNs) or long short-term memory (LSTM) networks, could be valuable for their ability to capture temporal dependencies in the sequential sensor data. For scenarios where interpretability is paramount, simpler models like logistic regression or decision trees may be preferred. Ensemble methods that combine multiple model types could also be employed to leverage the strengths of different approaches. The choice of model can be adapted based on factors such as the available computational resources, the specific characteristics of the telematics data, and the desired balance between model complexity and interpretability.

In general, the output of the model is a probability score indicating the likelihood that the event represents a genuine collision. This score is then compared against a predetermined threshold. If the score exceeds this threshold, the method determines that the event signature is indicative of a potential collision, and proceeds to step 310 for further processing and verification. If the score falls below the threshold, the method determines that the event signature is not representative of a potential collision. In this case, the method ends, effectively filtering out this event from further consideration. However, the data from these non-collision events is still valuable and may be stored for future analysis and model refinement.

In step 508, the method can include analyzing the output of the predictive model. If the predictive model outputs a positive label, the method can proceed to step 510. Otherwise, the method may end or, alternatively, flag the event as a false positive.

This step includes interpreting the output of the predictive model to make a decision about the event. The model's output is typically a probability score ranging from zero to one, indicating the likelihood of the event being a true collision. A threshold is applied to this probability score to determine whether the event should be classified as a potential collision. This threshold can be calibrated based on analysis of historical data and operational requirements. It's set to balance between detecting as many true collisions as possible while minimizing false positives.

If the probability exceeds the threshold, the event is labeled as a potential collision, and the method proceeds to step 510 for further processing. This positive label indicates that the event exhibits characteristics strongly associated with known collision events and warrants additional scrutiny. For events that don't meet the threshold, the system may simply end the process for these events, effectively filtering them out as non-collisions. Alternatively, it might flag these events as false positives. This flagging can be used for system improvement, as these cases can be analyzed later to refine the detection algorithms and potentially identify any systematic issues in earlier stages of the detection process.

In step 510, the method can include transmitting the event for further review.

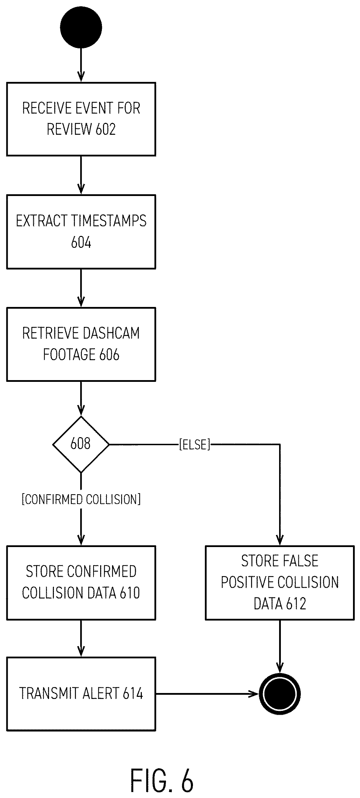

In some implementations, the method can prepares a data package for transmission to a separate review process, which may involve human analysts or additional automated systems. The transmitted data can include the original telematics data, the derived feature vector, the probability score from the predictive model, and any other relevant metadata about the event. This ensures that reviewers or computer vision algorithms have access to all the information used in the automated decision-making process. In some implementations, this step may also trigger the retrieval of additional contextual data, such as dashcam footage from the time of the event. This visual data can provide context for understanding the circumstances of the potential collision. Details of this process are described next in the description of FIG. 6.

FIG. 6 is a flow diagram illustrating a method for confirming that a predicted collision event is a true positive collision event using dashcam footage according to some of the disclosed embodiments.

In step 602, the method can include receiving an event for review. In some implementations, this event can be an event transmitted after the process of FIG. 5 and transmitted in step 510 of that figure.

In step 604, the method can include extracting timestamps from the telematics data. In some implementations, the timestamps can include an earliest timestamp and a latest timestamp, forming an event window.

In some implementations, the method can identify the earliest and latest timestamps that correspond to the anomalous readings that triggered the collision detection algorithms in earlier stages. The extraction process can look for the onset of unusual acceleration patterns, sudden speed changes, or abrupt orientation shifts that are characteristic of collision events. The earliest timestamp often corresponds to the moment just before these anomalies begin, capturing any pre-collision vehicle behavior. The latest timestamp is usually set to a point where the vehicle's behavior has begun to stabilize after the potential impact.

This event window, defined by the extracted timestamps, can span several seconds. The exact duration can be calibrated based on analysis of known collision events to ensure it encompasses the full progression of a typical collision. This includes not just the moment of impact, but also any pre-collision evasive maneuvers and immediate post-collision vehicle responses.

In step 606, the method can include retrieving dashcam footage for a vehicle associated with the telematics data during the event window.

This step involves accessing and retrieving the visual data captured by the vehicle's dashcam that corresponds to the identified event window. The dashcam footage serves as a supplementary source of information for verifying the occurrence of a collision.

The retrieval process typically involves querying a video storage system using the vehicle identifier and the timestamp range defined by the event window. This system may be a local storage device on the vehicle that is accessed remotely, or a cloud-based storage solution where video data is continuously uploaded.

As discussed, the retrieved footage usually includes not just the exact moment of the suspected collision, but also a buffer of time before and after the event. In some implementations, the system may retrieve multiple video streams if the vehicle is equipped with several cameras (e.g., front-facing, rear-facing, side cameras, etc.). This multi-angle footage can provide a more comprehensive view of the event, especially useful for side impacts or complex multi-vehicle scenarios. In cases where immediate video retrieval is not possible due to connectivity issues, the system may flag the event for later review when the footage becomes available.

In step 608, the method can include determining if the dashcam footage confirms the collision classification generated by the predictive model used in FIG. 5. In some implementations, step 608 can comprise a human-in-the-loop process whereby human reviewers manually confirm or reject collisions. Alternatively, or in conjunction with the foregoing, the method can employ a second machine learning or computer vision model to analyze the dashcam footage and confirm or reject collisions.

In a human-in-the-loop implementation, trained analysts can review the dashcam footage alongside the telematics data and the output of the predictive model. These reviewers can be experienced in identifying various types of collision events and are trained to spot subtle indicators that might not be apparent to automated systems. They look for visual cues such as sudden camera movements, visible impacts, or changes in the vehicle's surroundings that correlate with the anomalies detected in the telematics data.

Alternatively, or as a complementary approach, a specialized machine learning or computer vision model may be employed to analyze the dashcam footage. This model would be trained on a large dataset of collision and non-collision videos, learning to identify visual patterns indicative of collisions. It can use techniques such as object detection to identify other vehicles or obstacles, motion analysis to detect sudden changes in movement, or scene understanding to interpret the overall context of the event.

The system compares the results of this visual analysis (whether human or automated) with the classification provided by the telematics-based predictive model. A collision is typically confirmed when both the telematics data and the visual evidence support the occurrence of an impact event.

This dual-verification approach significantly enhances the accuracy of collision detection, reducing false positives and ensuring that only genuine collision events are reported. It also allows for the identification of complex or unusual collision scenarios that might be challenging for purely automated systems to classify correctly.

In step 612, if the dashcam footage contradicts the prediction of the predictive model of FIG. 5, the method can store false positive collision data as, for example, training data for the second machine learning or computer vision model.

In some implementations, the false positive event data, including both the telematics data and the corresponding dashcam footage, can be stored in a dedicated database. This database serves as a repository of test cases that can be used to enhance the system's accuracy over time. The stored data can include the original telematics readings, the derived feature vector, the probability score output by the initial predictive model, and the dashcam footage. It may also include metadata about the event, such as the environmental conditions, time of day, and vehicle type. In some implementations, the false positive data can be used for training and refining the second machine learning or computer vision model that analyzes dashcam footage. By exposing the model to these difficult cases where visual evidence contradicts sensor data, the system can learn to better distinguish between genuine collisions and events that may produce similar sensor readings but are not actual collisions. Additionally, this data can be used to refine the initial telematics-based predictive model. By analyzing the characteristics of these false positives, the method can identify patterns that lead to misclassifications and adjust the model accordingly.

In step 610, alternatively, if the dashcam footage confirms the prediction of the predictive model of FIG. 5, the method can store the confirmed collision data, again, as potential training data for the second machine learning or computer vision model. Thus, step 612 may generate negative training data while step 610 may generate positive training data.

In either step, the method may further include a synthesizing step whereby further training examples are generated. For example, in step 610, the method may retrieve known footage of non-collision video or image data and associate that footage of non-collision video or image data with the telematics data that represents a collision, and vice-versa for step 612. In this manner, the method can dynamically balance a training dataset.

In step 614, after confirming a collision, the method can include transmitting an alert to, for example, first responders, fleet managers, or other computing systems.

Once a collision has been verified through both telematics data analysis and visual confirmation, the system initiates its alert protocol. For first responders, such as emergency medical services or police, the alert might include information like the exact location of the collision, the severity of the impact as estimated from the telematics data, and any available information about the vehicle's occupants. For fleet managers, the alert might contain additional details relevant to operations, such as the vehicle's identification number, the driver's information, and the vehicle's operational status post-collision. This information allows fleet managers to quickly initiate their incident response protocols, which might include dispatching support vehicles, contacting the driver, or beginning the insurance claim process. Other computing systems that might receive these alerts could include automated dispatch systems, insurance company databases, or centralized fleet management software. These systems might use the collision data to automatically initiate various processes, such as scheduling vehicle repairs or updating risk assessment models.

The alert transmission system can use multiple communication channels (e.g., cellular networks, satellite communications) to ensure that the alert reaches its intended recipients even in areas with poor connectivity. The system may also implement prioritization algorithms to ensure that more severe collisions are reported and addressed with greater urgency.

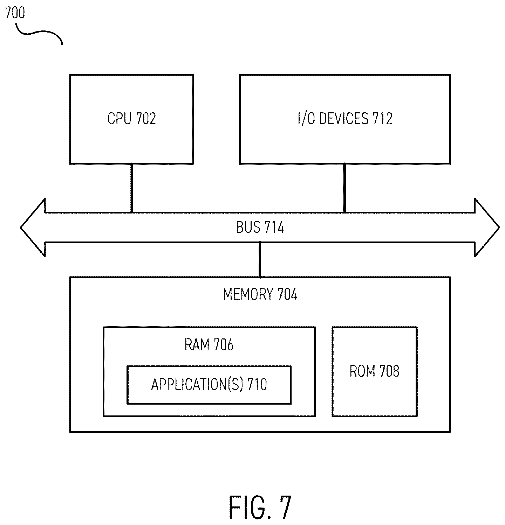

FIG. 7 is a block diagram of a computing device according to some embodiments of the disclosure.

As illustrated, the device 700 includes a processor or central processing unit (CPU) such as CPU 702 in communication with a memory 704 via a bus 714. The device also includes one or more input/output (I/O) or peripheral devices 712. Examples of peripheral devices include, but are not limited to, network interfaces, audio interfaces, display devices, keypads, mice, keyboard, touch screens, illuminators, haptic interfaces, global positioning system (GPS) receivers, cameras, or other optical, thermal, or electromagnetic sensors.

In some embodiments, the CPU 702 may comprise a general-purpose CPU. The CPU 702 may comprise a single-core or multiple-core CPU. The CPU 702 may comprise a system-on-a-chip (SoC) or a similar embedded system. In some embodiments, a graphics processing unit (GPU) may be used in place of, or in combination with, a CPU 702. Memory 704 may comprise a memory system including a dynamic random-access memory (DRAM), static random-access memory (SRAM), Flash (e.g., NAND Flash), or combinations thereof. In one embodiment, the bus 714 may comprise a Peripheral Component Interconnect Express (PCIe) bus. In some embodiments, the bus 714 may comprise multiple busses instead of a single bus.

Memory 704 illustrates an example of a non-transitory computer storage medium for tangibly storing information such as computer-readable instructions, data structures, program modules, or other data which are capable of being executed on CPU 702. Memory 704 can store a basic input/output system (BIOS) in read-only memory (ROM), such as ROM 708 for controlling the low-level operation of the device. The memory can also store an operating system in random-access memory (RAM) for controlling the operation of the device.

Applications 710 may include computer-executable instructions which, when executed by the device, perform any of the methods (or portions of the methods) described previously in the description of the preceding figures. In some embodiments, the software or programs implementing the method embodiments can be read from a hard disk drive (not illustrated) and temporarily stored in RAM 706 by CPU 702. CPU 702 may then read the software or data from RAM 706, process them, and store them in RAM 706 again.

The device may optionally communicate with a base station (not shown) or directly with another computing device. One or more network interfaces in peripheral devices 712 are sometimes referred to as a transceiver, transceiving device, or network interface card (NIC).

An audio interface in peripheral devices 712 produces and receives audio signals such as the sound of a human voice. For example, an audio interface may be coupled to a speaker and microphone (not shown) to enable telecommunication with others or generate an audio acknowledgment for some action. Displays in peripheral devices 712 may comprise liquid crystal display (LCD), gas plasma, light-emitting diode (LED), or any other type of display device used with a computing device. A display may also include a touch-sensitive screen arranged to receive input from an object such as a stylus or a digit from a human hand.

A keypad in peripheral devices 712 may comprise any input device arranged to receive input from a user. An illuminator in peripheral devices 712 may provide a status indication or provide light. The device can also comprise an input/output interface in peripheral devices 712 for communication with external devices, using communication technologies, such as USB, infrared, Bluetooth^{®}, or the like. A haptic interface in peripheral devices 712 provides tactile feedback to a user of the client device.

A GPS receiver in peripheral devices 712 can determine the physical coordinates of the device on the surface of the Earth, which typically outputs a location as latitude and longitude values. A GPS receiver can also employ other geo-positioning mechanisms, including, but not limited to, triangulation, assisted GPS (AGPS), E-OTD, CI, SAI, ETA, BSS, or the like, to further determine the physical location of the device on the surface of the Earth. In one embodiment, however, the device may communicate through other components, providing other information that may be employed to determine the physical location of the device, including, for example, a media access control (MAC) address, Internet Protocol (IP) address, or the like.

The device may include more or fewer components than those shown, depending on the deployment or usage of the device. For example, a server computing device, such as a rack-mounted server, may not include audio interfaces, displays, keypads, illuminators, haptic interfaces, Global Positioning System (GPS) receivers, or cameras/sensors. Some devices may include additional components not shown, such as graphics processing unit (GPU) devices, cryptographic co-processors, artificial intelligence (AI) accelerators, or other peripheral devices.

The subject matter disclosed above may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The preceding detailed description is, therefore, not intended to be taken in a limiting sense.

Throughout the specification and claims, terms may have nuanced meanings suggested or implied in context beyond an explicitly stated meaning. Likewise, the phrase "in an embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and," "or," or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general-purpose computer to alter its function as detailed herein, a special purpose computer, application-specific integrated circuit (ASIC), or other programmable data processing apparatus, such that the instructions, which execute via the processor of the computer or other programmable data processing apparatus, implement the functions/acts specified in the block diagrams or operational block or blocks. In some alternate implementations, the functions or acts noted in the blocks can occur out of the order noted in the operational illustrations. For example, two blocks shown in succession can in fact be executed substantially concurrently or the blocks can sometimes be executed in the reverse order, depending upon the functionality or acts involved.

Various examples are set out in the following numbered paragraphs (NP):
NP 1. A system comprising:
   a vehicle computing device installed within a vehicle configured to:
      generate telematics data for the vehicle,
      apply a heuristic filter on the telematics data to classify the telematics data as representing a potential collision of the vehicle, and
      identify collision candidates based on an output of the heuristic filter, the collision candidates including a subset of the telematics data; and
   a server computing device configured to:
      receive the collision candidates from the vehicle computing device,
      generate a feature vector representing the collision candidates,
      predict that the feature vector represents a collision by inputting the feature vector into a predictive model trained to classify feature vectors of telematics data to binary classifications of collisions,
      retrieve dashcam footage associated with the vehicle,
      confirm that a collision has occurred based on the dashcam footage and an output of the predictive model, and
      transmit a notification of the collision to a remote computing device.
NP 2. The system of NP 1, wherein the heuristic filter comprises a plurality of sub-processes that independently predict that a collision has occurred based on the telematics data and a determination step that employs a multi-signal coincidence process.
NP 3. The system of NP 1, wherein transmitting a notification of the collision to a remote computing device comprises transmitting the notification to one or more of a first responder computing device and a fleet manager computing device.
NP 4. A method comprising:
   receiving telematics data from a computing device installed in a vehicle;
   applying a heuristic filter on the telematics data to classify the telematics data as representing a potential collision of the vehicle;
   generating a feature vector representing the telematics data;
   predicting that the feature vector represents a collision by inputting the feature vector into a predictive model trained to classify feature vectors of telematics data to binary classifications of collisions;
   retrieving dashcam footage associated with the vehicle;
   confirming that a collision has occurred based on the dashcam footage and an output of the predictive model; and
   transmitting a notification of the collision to a remote computing device.
NP 5. The method of NP 4, wherein the heuristic filter comprises a plurality of sub-processes that independently predict that a collision has occurred based on the telematics data and a determination step that employs a multi-signal coincidence process.
NP 6. The method of NP 5, wherein the plurality of sub-processes include:
   a first sub-process that determines if a collision occurs based on a cosine of an angle between an inertial measurement unit acceleration vector and gravity and an inertial measurement unit jerk measurement;
   a second sub-process that determines if a collision occurs based on an acceleration value and a global positioning system jerk measurement; and
   a third sub-process that determines if a collision occurs based on the acceleration value and a speed jerk measurement.
NP 7. The method of NP 6, wherein the multi-signal coincidence process flags an event as representing a collision if a sufficient number of sub-processes are positive.
NP 8. The method of NP 6, wherein the heuristic filter further includes a step for determining if an inertial measurement unit jerk measurement is above a fixed threshold and flags the telematics data as a potential collision when the inertial measurement unit jerk measurement is above the fixed threshold.
NP 9. The method of NP 4, wherein applying a heuristic filter on the telematics data comprises executing the heuristic filter on the computing device installed within the vehicle.
NP 10. The method of NP 4, wherein the predictive model comprises a gradient boosting tree.
NP 11. The method of NP 4, wherein retrieving dashcam footage associated with the vehicle comprise extracting timestamps from the telematics data to define an event window and retrieving the dashcam footage using the timestamps.
NP 12. The method of NP 4, wherein confirming that a collision has occurred based on the dashcam footage and an output of the predictive model comprises displaying the dashcam footage via a reviewing computer interface and receiving a user input confirming or rejecting the output of the predictive model.
NP 13. The method of NP 4, wherein confirming that a collision has occurred based on the dashcam footage and an output of the predictive model comprises inputting the dashcam footage into a machine learning model configured to output a classification indicating whether a collision has occurred.
NP 14. The method of NP 4, wherein transmitting a notification of the collision to a remote computing device comprises transmitting the notification to one or more of a first responder computing device and a fleet manager computing device.
NP 15. A non-transitory computer-readable storage medium for tangibly storing computer program instructions capable of being executed by a computer processor, the computer program instructions defining steps of:
   receiving telematics data from a computing device installed in a vehicle;
   applying a heuristic filter on the telematics data to classify the telematics data as representing a potential collision of the vehicle;
   generating a feature vector representing the telematics data;
   predicting that the feature vector represents a collision by inputting the feature vector into a predictive model trained to classify feature vectors of telematics data to binary classifications of collisions;
   retrieving dashcam footage associated with the vehicle;
   confirming that a collision has occurred based on the dashcam footage and an output of the predictive model; and
   transmitting a notification of the collision to a remote computing device.
NP 16. The non-transitory computer-readable storage medium of NP 15, wherein the heuristic filter comprises a plurality of sub-processes that independently predict that a collision has occurred based on the telematics data and a determination step that employs a multi-signal coincidence process.
NP 17. The non-transitory computer-readable storage medium of NP 16, wherein the plurality of sub-processes include:
   a first sub-process that determines if a collision occurs based on a cosine of an angle between an inertial measurement unit acceleration vector and gravity and an inertial measurement unit jerk measurement;
   a second sub-process that determines if a collision occurs based on an acceleration value and a global positioning system jerk measurement; and
   a third sub-process that determines if a collision occurs based on the acceleration value and a speed jerk measurement.
NP 18. The non-transitory computer-readable storage medium of NP 15, wherein confirming that a collision has occurred based on the dashcam footage and an output of the predictive model comprises displaying the dashcam footage via a reviewing computer interface and receiving a user input confirming or rejecting the output of the predictive model.
NP 19. The non-transitory computer-readable storage medium of NP 15, wherein confirming that a collision has occurred based on the dashcam footage and an output of the predictive model comprises inputting the dashcam footage into a machine learning model configured to output a classification indicating whether a collision has occurred.
NP 20. The non-transitory computer-readable storage medium of NP 15, wherein transmitting a notification of the collision to a remote computing device comprises transmitting the notification to one or more of a first responder computing device and a fleet manager computing device.

## Claims

1. A system comprising:
a vehicle computing device installed within a vehicle configured to:
generate telematics data for the vehicle,
apply a heuristic filter on the telematics data to classify the telematics data as representing a potential collision of the vehicle, and
identify collision candidates based on an output of the heuristic filter, the collision candidates including a subset of the telematics data; and
a server computing device configured to:
receive the collision candidates from the vehicle computing device,
generate a feature vector representing the collision candidates,
predict that the feature vector represents a collision by inputting the feature vector into a predictive model trained to classify feature vectors of telematics data to binary classifications of collisions,
retrieve dashcam footage associated with the vehicle,
confirm that a collision has occurred based on the dashcam footage and an output of the predictive model, and
transmit a notification of the collision to a remote computing device.

2. The system of claim 1, wherein the heuristic filter comprises a plurality of sub-processes that independently predict that a collision has occurred based on the telematics data and a determination step that employs a multi-signal coincidence process.

3. The system of claims 1 or 2, wherein transmitting a notification of the collision to a remote computing device comprises transmitting the notification to one or more of a first responder computing device and a fleet manager computing device.

4. A method comprising:
receiving telematics data from a computing device installed in a vehicle;
applying a heuristic filter on the telematics data to classify the telematics data as representing a potential collision of the vehicle;
generating a feature vector representing the telematics data;
predicting that the feature vector represents a collision by inputting the feature vector into a predictive model trained to classify feature vectors of telematics data to binary classifications of collisions;
retrieving dashcam footage associated with the vehicle;
confirming that a collision has occurred based on the dashcam footage and an output of the predictive model; and
transmitting a notification of the collision to a remote computing device.

5. The method of claim 4, wherein the heuristic filter comprises a plurality of sub-processes that independently predict that a collision has occurred based on the telematics data and a determination step that employs a multi-signal coincidence process.

6. The method of any of claims 4 to 5, wherein the plurality of sub-processes include:
a first sub-process that determines if a collision occurs based on a cosine of an angle between an inertial measurement unit acceleration vector and gravity and an inertial measurement unit jerk measurement;
a second sub-process that determines if a collision occurs based on an acceleration value and a global positioning system jerk measurement; and
a third sub-process that determines if a collision occurs based on the acceleration value and a speed jerk measurement.

7. The method of any of claim 4 to 6, wherein the multi-signal coincidence process flags an event as representing a collision if a sufficient number of sub-processes are positive.

8. The method of any of claims 4 to 7, wherein the heuristic filter further includes a step for determining if an inertial measurement unit jerk measurement is above a fixed threshold and flags the telematics data as a potential collision when the inertial measurement unit jerk measurement is above the fixed threshold.

9. The method of any of claims 4 to 8, wherein applying a heuristic filter on the telematics data comprises executing the heuristic filter on the computing device installed within the vehicle.

10. The method of any of claims 4 to 9, wherein the predictive model comprises a gradient boosting tree.

11. The method of any of claims 4 to 10, wherein retrieving dashcam footage associated with the vehicle comprise extracting timestamps from the telematics data to define an event window and retrieving the dashcam footage using the timestamps.

12. The method of any of claims 4 to 11, wherein confirming that a collision has occurred based on the dashcam footage and an output of the predictive model comprises:
(a) displaying the dashcam footage via a reviewing computer interface and receiving a user input confirming or rejecting the output of the predictive model; or
(b) inputting the dashcam footage into a machine learning model configured to output a classification indicating whether a collision has occurred.

13. The method of any of claims 4 to 12, wherein transmitting a notification of the collision to a remote computing device comprises transmitting the notification to one or more of a first responder computing device and a fleet manager computing device.

14. A computer program which, when executed by a processor, causes the processor to carry out the method of any one of the claims 4-13.

15. A computer readable medium storing the computer program of claim 14.
